# EUROPEAN PATENT APPLICATION

(11) **EP 4 586 564 A1**
(43) Date of publication of application: **16.07.2025**
(21) Application number: 22957748.1
(22) Date of filing: 08.09.2022
(51) Int. Cl.: H04L 27/00

(54) **INFORMATION DETERMINATION METHOD/APPARATUS/DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/117887
(87) International publication number: WO 2024/050776

(57) **Abstract**

The present disclosure provides an information determination method/apparatus/device and a storage medium. The method comprises: receiving configuration information and indication information, the configuration information being used to configure a PDSCH transmission manner, and the indication information being used to indicate at least one joint TCI state and/or at least one downlink (DL) TCI state; in response to the PDSCH transmission manner configured by the configuration information being a target transmission manner, determining a TCI state used for PDCCH transmission and/or downlink signal transmission among the at least one joint TCI state and/or the at least one DL TCI state. In a situation in which a network device indicates three or four TCI states, the present disclosure provides a method for a terminal device to determine which TCI state is specifically used for PDCCH transmission, thereby improving transmission performance based on multi-TRP coherent joint transmission.

## Description

### FIELD

The present disclosure relates to the field of communication technology, and in particular to a method/apparatus/device for determining information and a storage medium.

### BACKGROUND

In multiple-input multiple-output (MIMO) systems, coherent joint transmission (CJT), which is realized by multiple transmission reception points (TRPs) with ideal backhaul connections, is introduced. Further, a single-TRP (S-TRP) case has been considered for a unified transmission configuration indicator (TCI) state currently. Specifically, the unified TCI state is that the same set of TCI states is indicated for multiple channels/signals of a TRP, where the same set of TCI states may currently be indicated separately for uplink and downlink, i.e., respectively indicating the DL (downlink) TCI state and/or UL (uplink) TCI state, or jointly indicating uplink and downlink, i.e., indicating a joint TCI state. Further, the terminal device may be used based on the indicated DL TCI state and/or joint TCI state for physical downlink control channel (PDCCH) transmission, physical downlink shared channel (PDSCH) and/or downlink signal reception.

In related art, MIMO currently supports CJT for up to 4 TRPs, then the network device indicates 3 or 4 TCI states to the terminal device. However, only manners for the terminal device to determine which TCI state to use for PDCCH transmission when the network device indicates 1 or 2 TCI states are currently discussed, and thus the manners in the related art cannot be applied to the determination process of the terminal device determining specifically which TCI state to use for PDCCH transmission in the scenario where the network device indicates 3 or 4 TCI states.

### SUMMARY

The present disclosure provides an information determination method/apparatus/device and a storage medium for use in determining which TCI state is specifically used for PDCCH transmission by a terminal device when 3 or 4 TCI states are indicated by a network device.

In a first aspect, embodiments of the present disclosure provide a method for determining information, which is performed by a terminal device and includes:
receiving configuration information and indication information, in which the configuration information is configured to configure a physical downlink shared channel (PDSCH) transmission manner, and the indication information is configured to indicate at least one joint transmission configuration indicator (TCI) state and/or at least one downlink (DL) TCI state; and
in response to the PDSCH transmission manner configured by the configuration information being a target transmission manner, determining a TCI state configured for physical downlink control channel (PDCCH) transmission and/or downlink signal transmission from the at least one joint TCI state and/or the at least one DL TCI state.

In the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

In a second aspect, embodiments of the present disclosure provide a method for determining information, which is performed by a network device and includes:
sending configuration information and indication information, in which the configuration information is configured to configure a PDSCH transmission manner, and the indication information is configured to indicate at least one joint TCI state and/or at least one downlink (DL) TCI state.

In a third aspect, embodiments of the present disclosure provide a communication device, which is configured in the terminal device and includes:
a transceiver module configured to receive configuration information and indication information, in which the configuration information is configured to configure a PDSCH transmission manner, and the indication information is configured to indicate at least one joint TCI state and/or at least one downlink (DL) TCI state; and
a processing module configured to determine, in response to the PDSCH transmission manner configured by the configuration information being a target transmission manner, a TCI state configured for the PDCCH transmission and/or downlink signal transmission from the at least one joint TCI state and/or the at least one DL TCI state.

In a fourth aspect, embodiments of the present disclosure provide a communication device, which is configured in the network device and includes:
a transceiver module configured to send configuration information and indication information, in which the configuration information is configured to configure a PDSCH transmission manner, and the indication information is configured to indicate at least one joint TCI state and/or at least one downlink (DL) TCI state.

In a fifth aspect, embodiments of the present disclosure provide a communication device includes a processor that performs the method of the first aspect when the processor invokes a computer program in a memory.

In a sixth aspect, embodiments of the present disclosure provide a communication device includes a processor that performs the method of the second aspect when the processor invokes a computer program in a memory.

In a seventh aspect, embodiments of the present disclosure provide a communication device including a processor and a memory storing a computer program; and the processor executes the computer program stored in the memory to cause the communication device to perform the method in the first aspect described above.

In an eighth aspect, embodiments of the present disclosure provide a communication device including a processor and a memory storing a computer program; and the processor executes the computer program stored in the memory to cause the communication device to perform the method in the second aspect described above.

In a ninth aspect, embodiments of the present disclosure provide a communication device including a processor and an interface circuit configured to receive code instructions and transmit the code instructions to the processor, and the processor is configured to run the code instructions to cause the device to perform the method of the first aspect described above.

In a tenth aspect, embodiments of the present disclosure provide a communication device including a processor and an interface circuit configured to receive code instructions and transmit the code instructions to the processor, and the processor is configured to run the code instructions to cause the device to perform the method of the second aspect described above.

In an eleventh aspect, embodiments of the present disclosure provide a communication system. The system includes a communication device in the third aspect and a communication device in the fourth aspect, or, the system includes a communication device in the fifth aspect and a communication device in the sixth aspect, or, the system includes a communication device in the seventh aspect and a communication device in the eighth aspect, or, the system includes a communication device in the ninth aspect and the communication device in the tenth aspect.

In a twelfth aspect, embodiments of the present disclosure provide a computer-readable storage medium configured to store instructions for use by the network device to cause the terminal device to perform the method in any of the first aspect to the second aspect when the instructions are executed.

In a thirteenth aspect, the present disclosure further provides a computer program product including a computer program that, when run on a computer, causes the computer to perform the method in any of the first aspect to the second aspect described above.

In a fourteenth aspect, the present disclosure provides a chip system including at least one processor and an interface configured to support the network device to implement the functions involved in the method in any of the first aspect to the second aspect, for example, determining or processing at least one of the data and information involved in the method described above. In a possible design, the chip system further includes a memory, and the memory is configured to store a computer program and data necessary for the source and secondary nodes. The chip system may be composed of a chip or may include a chip and other discrete devices.

In a fifth aspect, the present disclosure provides a computer program that, when run on a computer, causes the computer to perform the method in any of the first aspect to the second aspect described above.

### BRIEF DESCRIPTION OF THE DRAWINGS

These and other aspects and advantages of embodiments of the present disclosure will become apparent and more readily appreciated from the following descriptions made with reference to the drawings, in which:
FIG. 1 is a schematic diagram of an architecture of a communication system provided by an embodiment of the present disclosure;
FIG. 2 is a flow chart of a method for determining information provided by another embodiment of the present disclosure;
FIG. 3 is a flow chart of a method for determining information provided by yet another embodiment of the present disclosure;
FIG. 4 is a flow chart of a method for determining information provided by still another embodiment of the present disclosure;
FIG. 5 is a flow chart of a method for determining information provided by another embodiment of the present disclosure;
FIG. 6 is a flow chart of a method for determining information provided by yet another embodiment of the present disclosure;
FIG. 7 is a flow chart of a method for determining information provided by still another embodiment of the present disclosure;
FIG. 8 is a flow chart of a method for determining information provided by an embodiment of the present disclosure;
FIG. 9 is a flow chart of a method for determining information provided by another embodiment of the present disclosure;
FIG. 10 is a flow chart of a method for determining information provided by another embodiment of the present disclosure;
FIG. 11 is a flow chart of a method for determining information provided by another embodiment of the present disclosure;
FIG. 12 is a flow chart of a method for determining information provided by another embodiment of the present disclosure;
FIG. 13 is a flow chart of a method for determining information provided by another embodiment of the present disclosure;
FIG. 14 is a flow chart of a method for determining information provided by another embodiment of the present disclosure;
FIG. 15 is a flow chart of a method for determining information provided by another embodiment of the present disclosure;
FIG. 16 is a flow chart of a method for determining information provided by another embodiment of the present disclosure;
FIG. 17 is a flow chart of a method for determining information provided by another embodiment of the present disclosure;
FIG. 18 is a flow chart of a method for determining information provided by another embodiment of the present disclosure;
FIG. 19 is a flow chart of a method for determining information provided by another embodiment of the present disclosure;
FIG. 20 is a flow chart of a method for determining information provided by another embodiment of the present disclosure;
FIG. 21 is a flow chart of a method for determining information provided by another embodiment of the present disclosure;
FIG. 22 is a flow chart of a method for determining information provided by another embodiment of the present disclosure;
FIG. 23 is a flow chart of a method for determining information provided by another embodiment of the present disclosure;
FIG. 24 is a flow chart of a method for determining information provided by another embodiment of the present disclosure;
FIG. 25 is a flow chart of a method for determining information provided by another embodiment of the present disclosure;
FIG. 26 is a schematic block diagram of a communication device provided by another embodiment of the present disclosure;
FIG. 27 is a schematic block diagram of a communication device provided by another embodiment of the present disclosure;
FIG. 28 is a block diagram of a user equipment provided by an embodiment of the present disclosure; and
FIG. 29 is a block diagram of a network side device provided by an embodiment of the present disclosure.

### DETAILED DESCRIPTION

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with embodiments of the present disclosure. On the contrary, they are merely examples of a device and a method consistent with some aspects of embodiments of the present disclosure, as elaborated in the appended claims.

The terms used in embodiments of the present disclosure are only for purpose of description of particular embodiments, and are not intended to limit the embodiments of the present disclosure. The singular form "a", "the" and "this" used in embodiments of the present disclosure and the appended claims is also intended to include the plural form, unless other meanings are explicitly expressed in the context. It should be understood that the term "and/or" used herein refers to include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, a first information may be referred to as a second information without departing from the scope of the embodiments of the present disclosure, and similarly, the second information may also be referred to as the first information. Depending on the context, the word "if" used herein may be interpreted as "when...", "upon..." or "in response to determination".

Embodiments of the present disclosure will be described in detail and examples of the embodiments will be illustrated in the drawings, where same or similar reference numerals are used to indicate same or similar elements. The embodiments described herein with reference to drawings are explanatory, illustrative, and used to generally understand the present disclosure. The embodiments shall not be construed to limit the present disclosure.

For ease of understanding, the terms involved in the present application are first introduced.
1. Unified transmission configuration indicator state (unified TCI state)
   The unified TCI state includes a joint TCI state and/or a separate TCI state. The joint TCI state specifically includes indicating that a certain TCI state is configured for both uplink sending and downlink reception; the separate TCI state specifically includes indicating that a certain TCI state is configured for uplink sending or downlink reception. The separate TCI state includes a DL TCI state and a UL TCI state, the DL TCI state is configured for the downlink reception, and the UL TCI state is configured for the uplink sending.
2. physical downlink control channel (PDCCH) transmission
   The PDCCH carries downlink control information, and specifically includes transmission format, resource allocation, uplink scheduling license, power control, and uplink retransmission information.
3. physical downlink shared channel (PDSCH)

The PDSCH is configured to carry the downlink data.

In order to better understand a method for determining information disclosed by embodiments of the present disclosure, a communication system to which embodiments of the present disclosure apply is first described below.

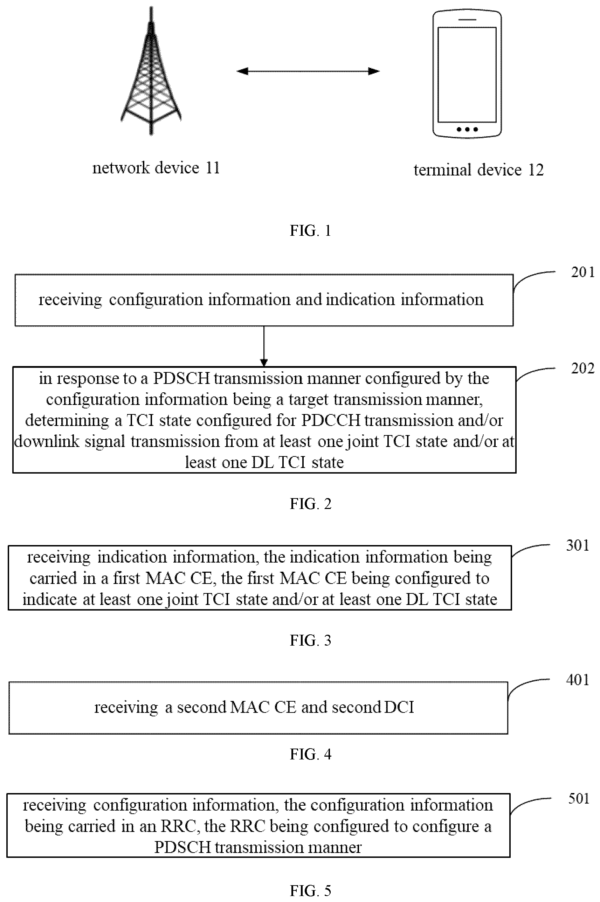

Referring to FIG. 1, FIG. 1 is a schematic diagram of an architecture of a communication system provided by an embodiment of the present application. The communication system may include, but is not limited to, a network device, and a terminal device, and the number and form of the devices shown in FIG. 1 are for illustrative purposes only and do not constitute a limitation of the embodiments of the present application, which may include two or more network devices and two or more terminal devices in practical applications. For example, the communication system illustrated in FIG. 1 includes one first network device 11, and one terminal device 12.

It should be noted that the technical solutions of the embodiments of the present application can be applied to various communication systems. Examples include long term evolution (LTE) systems, fifth generation (5G) mobile communication systems, 5G new radio (NR) systems, or other future new mobile communication systems.

The network device 11 in embodiments of the present disclosure is an entity on the network side used to transmit or receive signals. For example, the network device 11 may be an Evolved NodeB (eNB), a Transmission Reception Point (TRP), a radio remote head (RRH), a Next Generation NodeB (gNB) in an NR system, a base station in other future mobile communication systems, or an access node in a Wireless Fidelity (WiFi) system, among others. The embodiments of the present disclosure do not limit the specific technology and the specific device form used for the network device. The network device provided by embodiments of the present application may be composed of a Centralized Unit (CU) and a Distributed Unit (DU), in which the CU may also be referred to as a Control Unit, and the use of the CU-DU structure may split the protocol layer of the network device, such as a base station. Some of the protocol layer functions are placed in the CU for centralized control, and some or all of the remaining protocol layer functions are distributed in the DU, which is centrally controlled by the CU.

The terminal device 12 in embodiments of the present disclosure is an entity on the user side used to receive or transmit signals, such as a mobile phone. The terminal device can also be referred to as a terminal, user equipment (UE), mobile station (MS), mobile terminal (MT) and so on. The terminal device may be a vehicle with communication function, a smart vehicle, a mobile phone, a wearable device, a tablet computer (Pad), a computer with wireless transceiving function, a virtual reality (VR) terminal device, an augmented reality (AR) terminal device, a wireless terminal device for industrial control, a wireless terminal device for self-driving, a wireless terminal device for remote medical surgery, a wireless terminal device for smart grid, a wireless terminal device for transportation security, a wireless terminal device for smart city, a wireless terminal device for smart home, and so on. The embodiments of the present application do not limit the specific technology and the specific device form used for the terminal device.

It is to be understood that the communication system described in embodiments of the present disclosure is intended to more clearly illustrate the technical solutions of embodiments of the present disclosure and does not constitute a limitation of the technical solutions provided by the embodiments of the present disclosure, and a person of ordinary skill in the art may know that, with the evolution of the system architecture and the emergence of new business scenarios, the technical solutions provided by the embodiments of the present disclosure are equally applicable to similar technical problems.

The method/apparatus/device for determining information and the storage medium provided by embodiments of the present disclosure are described in detail below with reference to the accompanying drawings.

FIG. 2 is a flow chart of a method for determining information provided by an embodiment of the present disclosure, the method is performed by a terminal device, and as illustrated in FIG. 2, the method for determining information may include following steps.

In step 201, configuration information and indication information are received. In an embodiment of the present disclosure, the configuration information is configured to configure a PDSCH transmission manner, and the indication information is configured to indicate at least one joint TCI state and/or at least one DL TCI state.

It should be noted that the method of the present disclosure is applied in a MIMO system that can support CJT for up to 4 TRPs/RRHs. Thus, in an embodiment of the present disclosure, the number of the at least one joint TCI state and/or at least one DL TCI state indicate by the indication information is greater than or equal to 1 and less than or equal to 4.

Furthermore, in an embodiment of the present disclosure, the at least one joint TCI state and/or at least one DL TCI state indicate by the indication information may be the TCI state configured for PDSCH transmission.

Further, in an embodiment of the present disclosure, the joint TCI state or the DL TCI state may contain a quasi co-location type A (QCL Type A) and/or a QCL Type B. The QCL Type A may contain {average delay, delay spread, Doppler shift, Doppler spread}. The QCL Type A may contain {Doppler shift, Doppler spread}.

In another embodiment of the present disclosure, the joint TCI state or the DL TCI state may contain a quasi co-location type, and the quasi co-location includes at least one of following parameters: an average delay; a delay spread; a Doppler shift; or a Doppler spread.

In step 202, in response to the PDSCH transmission manner configured by the configuration information being a target transmission manner, a TCI state configured for the PDCCH transmission and/or downlink signal transmission is determined from the at least one joint TCI state and/or the at least one DL TCI state.

In an embodiment of the present disclosure, the target transmission manner may be CJT. Furthermore, in an embodiment of the present disclosure, the CJT may be CJT for 2 TRPs/RRHs, CJT for 3 TRPs/RRHs, or CJT for 4 TRPs/RRHs.

Furthermore, in an embodiment of the present disclosure, the downlink signal may include at least one of: a channel state information reference signal (CSI-RS); a demodulation reference signal (DMRS); a positioning reference signal (PRS); or a tracking reference signal (TRS).

Additionally, with respect to how the configuration information in step 201 above specifically configures the PDSCH transmission manner and how the indication information specifically indicates at least one joint TCI state and/or at least one downlink (DL) TCI state, and, with respect to how the terminal device in step 202 specifically determines the TCI state for PDCCH transmission and/or downlink signal transmission from the at least one joint TCI state and/or the at least one DL TCI state will be described in detail in subsequent embodiments.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 3 is a flow chart of a method for determining information provided by an embodiment of the present disclosure, the method is performed by a terminal device, and as illustrated in FIG. 3, the method for determining information may include following steps.

In step 301, indication information is received, the indication information is carried in a first medium access control control element (MAC CE), and the first MAC CE is configured to indicate at least one joint TCI state and/or at least one DL TCI state.

In an embodiment of the present disclosure, the first MAC CE may indicate the at least one joint TCI state and/or the at least one DL TCI state by indicating an ID of the TCI state.

Furthermore, in an embodiment of the present disclosure, there is a correspondence between the TCI state and a codepoint, and the TCI state indicated by the first MAC CE corresponds to the same codepoint. An information domain corresponding to the codepoint is carried in first downlink control information (DCI). For example, in an embodiment of the present disclosure, the codepoint may be carried in a TCI domain of the first DCI. "The information domain corresponding to the codepoint" may be understood as an information domain indicating the codepoint. Furthermore, it should be noted that, in an embodiment of the present disclosure, in a case where the TCI state indicated by the first MAC CE corresponds to the same codepoint and the information domain corresponding to the codepoint is carried in the first DCI, the first DCI may be sent to the terminal device to indicate the codepoint to the terminal device, or may not be sent to the terminal device to not indicate the codepoint to the terminal device.

For example, in an embodiment of the present disclosure, it is assumed that the TCI state corresponding to a codepoint "000" includes a joint TCI state with ID "2" and a DL TCI state with ID "3". The first MAC CE may indicate the joint TCI state with ID "2" and the DL TCI state with ID "3", and the codepoint '000' corresponding to the joint TCI state with ID '2' and the DL TCI state with ID '3' corresponds to the codepoint '000' of the TCI domain of the first DCI.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 4 is a flow chart of a method for determining information provided by an embodiment of the present disclosure, the method is performed by a terminal device, and as illustrated in FIG. 4, the method for determining information may include following steps.

In step 401, a second MAC CE and second DCI are received.

In an embodiment of the present disclosure, the second MAC CE carries the indication information described above, the second MAC CE may be configured to indicate the at least one joint TCI state and/or the at least one DL TCI state corresponding to a plurality of codepoints, respectively; the second DCI may be configured to indicate one codepoint of the plurality of codepoints, and the one codepoint may be indicated by a TCI domain of the second DCI.

In an embodiment of the present disclosure, the second MAC CE may indicate the at least one joint TCI state and/or the at least one DL TCI state by indicating an ID of the TCI state.

For example, in an embodiment of the present disclosure, it is assumed that the TCI state corresponding to a codepoint "000" includes a joint TCI state with ID "2" and a DL TCI state with ID "3"; the TCI state corresponding to a codepoint "001" includes a joint TCI state with ID "4". The second MAC CE may indicate the joint TCI state with ID "2" and the DL TCI state with ID "3" corresponding to the codepoint "000", and the joint TCI state with ID "4" corresponding to the codepoint "001"; and the TCI domain of the second DCI may indicate the codepoint "000" or the codepoint "001".

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 5 is a flow chart of a method for determining information provided by an embodiment of the present disclosure, the method is performed by a terminal device, and as illustrated in FIG. 5, the method for determining information may include following steps.

In step 501, configuration information is received, the configuration information is carried in a radio resource control (RRC), and the RRC is configured to configure a PDSCH transmission manner.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

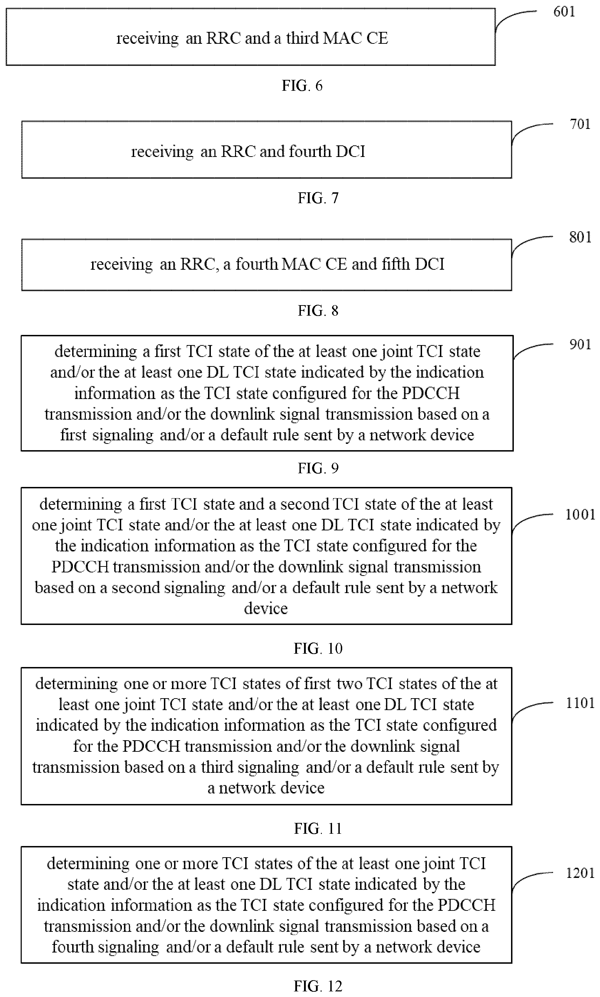

FIG. 6 is a flow chart of a method for determining information provided by an embodiment of the present disclosure, the method is performed by a terminal device, and as illustrated in FIG. 6, the method for determining information may include following steps.

In step 601, an RRC and a third MAC CE are received.

In an embodiment of the present disclosure, the RRC carries the configuration information described above, and the RRC is configured to configure the PDSCH transmission manner.

Furthermore, in an embodiment of the present disclosure, the third MAC CE may be configured to indicate the number of joint TCI states and/or DL TCI states corresponding to the PDSCH. Alternatively, in another embodiment of the present disclosure, the third MAC CE may be configured to indicate the at least one joint TCI state and/or the at least one DL TCI state, the TCI state indicated by the third MAC CE corresponds to the same codepoint, and the information domain corresponding to the codepoint is contained in the third DCI. In a case where the third MAC CE is configured to indicate the at least one joint TCI state and/or the at least one DL TCI state, the structure of the third MAC CE is similar to that of the first MAC CE described above, details of which are described above.

Additionally, it should be noted that, in an embodiment of the present disclosure, the joint TCI state and/or the DL TCI state corresponding to the PDSCH described above may specifically understood as the joint TCI state and/or the DL TCI state configured for the PDSCH transmission. Furthermore, the number of joint TCI states and/or DL TCI states corresponding to the PDSCH may be greater than or equal to the number of the at least one joint TCI state and/or the at least one DL TCI state indicated by the indication information.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 7 is a flow chart of a method for determining information provided by an embodiment of the present disclosure, the method is performed by a terminal device, and as illustrated in FIG. 7, the method for determining information may include following steps.

In step 701, an RRC and a fourth DCI are received.

In an embodiment of the present disclosure, the RRC carries the configuration information described above, and the RRC is configured to configure the PDSCH transmission manner.

Furthermore, in an embodiment of the present disclosure, the fourth DCI may be configured to indicate the number of joint TCI states and/or DL TCI states corresponding to the PDSCH. For a related introduction of the joint TCI state and/or DL TCI state corresponding to the PDSCH, reference can be made to the description of the embodiments described above.

Alternatively, in an embodiment of the present disclosure, the fourth DCI may be configured to indicate one codepoint, and the one codepoint corresponds to at least one joint TCI state and/or at least one DL TCI state of joint TCI states and/or DL TCI states indicated by the indication information. For example, the fourth DCI may use the TCI domain or other information to indicate the one codepoint.

For example, it is assumed that the indication information indicates a joint TCI state with ID "2" and a DL TCI state with ID "3", the joint TCI state with ID "2" and the DL TCI state with ID "3" correspond to a codepoint "000", and the fourth DCI may use the TCI domain to indicate the codepoint "000". Alternatively, it is assumed that the indication information indicates a joint TCI state with ID "2" and a DL TCI state with ID "3", the joint TCI state with ID "2" corresponds to a codepoint "00", the DL TCI state with ID "3" corresponds to a codepoint "01", the joint TCI state with ID "2" and the DL TCI state with ID "3" correspond to a codepoint "10", and the fourth DCI may use other information domain to indicate the codepoint "00", "10", or "10". Alternatively, it is assumed that the indication information indicates a joint TCI state with ID "2", a DL TCI state with ID "3", and a joint TCI state with ID "4", the joint TCI state with ID "2" and the DL TCI state with ID "3"correspond to a codepoint "00", the joint TCI state with ID "4" corresponds to a codepoint "01", and the fourth DCI may use other information domain to indicate the codepoint "00" or the codepoint "01".

Additionally, it should be noted that, in an embodiment of the present disclosure, the joint TCI state and/or the DL TCI state corresponding to the PDSCH described above may specifically understood as the joint TCI state and/or the DL TCI state configured for the PDSCH transmission. Furthermore, the number of joint TCI states and/or DL TCI states corresponding to the PDSCH may be greater than or equal to the number of the at least one joint TCI state and/or the at least one DL TCI state indicated by the indication information.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 8 is a flow chart of a method for determining information provided by an embodiment of the present disclosure, the method is performed by a terminal device, and as illustrated in FIG. 8, the method for determining information may include following steps.

In step 801, an RRC, a fourth MAC CE and fifth DCI are received.

In an embodiment of the present disclosure, the RRC carries the configuration information described above, and the RRC is configured to configure the PDSCH transmission manner.

Furthermore, in an embodiment of the present disclosure, the fourth MAC CE is configured to indicate at least one first value, the first value is a candidate value for a number of joint TCI states and/or DL TCI states corresponding to the PDSCH, the fifth DCI is configured to indicate one codepoint, and the codepoint corresponds to one of the first value. Optionally, the one of the first value may specifically be an actual number of joint TCI states and/or DL TCI states corresponding to the PDSCH.

From the above, it is clear that there is also a correspondence between codepoint and the candidate value mentioned above. Furthermore, in conjunction with the foregoing, it can be seen that there is also a correspondence between codepoint and TCI state. Based on this, in order to differentiate the two type of codepoints, in an embodiment of the present disclosure, the codepoint having correspondence with the candidate value and the codepoint having correspondence with the TCI state are made to be indicated by different domains of the DCIs (e.g., the first DCI to the fifth DCI described above). For example, the codepoint having correspondence with the TCI state is indicated by the TCI domain of the DCI, and codepoint having correspondence with the candidate value is indicated by a domain other than the TCI domain of the DCI. Based on this, after receiving the DCI, the terminal device can determine that the codepoint carried by the TCI domain of the DCI is corresponding to the TCI state, and, the codepoint carried by the other domains of the DCI other than the TCI domain is corresponding to the candidate value.

For example, it is assumed that the codepoint having correspondence with the candidate value is indicated by a first domain of the DCI other than the TCI domain, and based on this, it is assumed that the candidate value for the number of joint TCI states and/or DL TCI states corresponding to the PDSCH is: 2, 3, 4, in which the candidate value "2" corresponds to a codepoint "00", the candidate value "3" corresponds to a codepoint "01", a candidate value "4" corresponds to a codepoint '10', and, the actual number of joint TCI states and/or DL TCI states corresponding to the PDSCH is: 3. Then the fourth MAC CE may indicate 2, 3, 4, and the first domain of the fifth DCI may indicate a codepoint "01".

In another embodiment of the present disclosure, the fourth MAC CE may be configured to indicate the at least one joint TCI state and/or the at least one DL TCI state corresponding to a plurality of codepoints, respectively, and the fifth DCI may be configured to indicate one codepoint of the plurality of codepoints. The structure of the fourth MAC CE may be similar to the structure of the second MAC CE described above, and the structure of the fifth DCI may be similar to the structure of the second DCI described above, and for details reference can be made to the above description.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 9 is a flow chart of a method for determining information provided by an embodiment of the present disclosure, the method is performed by a terminal device, and as illustrated in FIG. 9, the method for determining information may include following steps.

In step 901, a first TCI state of the at least one joint TCI state and/or the at least one DL TCI state indicated by the indication information is determined as the TCI state configured for the PDCCH transmission and/or the downlink signal transmission based on a first signaling and/or a default rule sent by a network device.

In an embodiment of the present disclosure, the first signaling may include at least one of: an RRC; a MAC CE; or DCI.

Furthermore, in an embodiment of the present disclosure, the first TCI state described above may be a first TCI state of all TCI states indicated by the indication information. In other words, the first TCI state may be a first indicated TCI state of all TCI states indicated by the indication information.

For example, it is assumed that the indication information sequentially indicates a joint TCI state with ID "2", a DL TCI state with ID "3", and a joint TCI state with ID "4", and in which the joint TCI state with ID "2" is the first TCI state of all TCI states indicated by the indication information, and then the terminal device may determine the joint TCI state with ID "2" as the TCI state for PDCCH transmission and/or downlink signal transmission.

Alternatively, in another embodiment of the present disclosure, the first TCI state described above may be a first TCI state of TCI states containing a target QCL Type of all TCI states indicated by the indication information. The target QCL Type may be a QCL Type A or a QCL Type B.

For example, it is assumed that the target QCL Type is a target QCL Type A, and the indication information sequentially indicates a joint TCI state with ID "2", a DL TCI state with ID "3", and a joint TCI state with ID "4", and in which the joint TCI state with ID "2" includes the QCL Type B, and the DL TCI state with ID "3" and the joint TCI state with ID "4" include the QCL Type A. Then, the DL TCI state with ID "3" is the first TCI state of TCI states containing the QCL Type A of all TCI states indicated by the indication information, and thus the terminal device may determine the DL TCI state with ID "3" as the TCI state for PDCCH transmission and/or downlink signal transmission.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 10 is a flow chart of a method for determining information provided by an embodiment of the present disclosure, the method is performed by a terminal device, and as illustrated in FIG. 10, the method for determining information may include following steps.

In step 1001, a first TCI state and a second TCI state of the at least one joint TCI state and/or the at least one DL TCI state indicated by the indication information are determined as the TCI states configured for the PDCCH transmission and/or the downlink signal transmission based on a second signaling and/or a default rule sent by a network device.

In an embodiment of the present disclosure, the second signaling may include at least one of: an RRC; a MAC CE; or DCI.

For a related introduction of the first TCI state, reference can be made to the description of the embodiments described above.

Furthermore, in an embodiment of the present disclosure, the second TCI state described above may be a second TCI state of all TCI states indicated by the indication information. Alternatively, in another embodiment of the present disclosure, the second TCI state described above may be a second TCI state of TCI states containing a target QCL Type of all TCI states indicated by the indication information. The target QCL Type may be a QCL Type A or a QCL Type B. The principles associated with the second TCI state are the same as those associated with the first TCI state as described above, and will not be repeated herein.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 11 is a flow chart of a method for determining information provided by an embodiment of the present disclosure, the method is performed by a terminal device, and as illustrated in FIG. 11, the method for determining information may include following steps.

In step 1101, one or two TCI states of first two TCI states of the at least one joint TCI state and/or the at least one DL TCI state indicated by the indication information is determined as the TCI state configured for the PDCCH transmission and/or the downlink signal transmission based on a third signaling and/or a default rule sent by a network device.

In an embodiment of the present disclosure, the third signaling may include at least one of: an RRC; a MAC CE; or DCI.

In an embodiment of the present disclosure, the first two TCI states described above may be fist two TCI states of all TCI states indicated by the indication information. Alternatively, in another embodiment of the present disclosure, the first two TCI states described above may be first two TCI states of TCI states containing a target QCL Type of all TCI states indicated by the indication information. The target QCL Type may be a QCL Type A or a QCL Type B. The principles associated with the first two TCI states are the same as those associated with the first TCI state as described above, and will not be repeated herein.

Further, in an embodiment of the present disclosure, a first TCI state, a second TCI state, or a first TCI state and a second TCI state of the first two TCI states of the at least one joint TCI state and/or the at least one DL TCI state indicated by the indication information is determined as the TCI state configured for the PDCCH transmission and/or the downlink signal transmission.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 12 is a flow chart of a method for determining information provided by an embodiment of the present disclosure, the method is performed by a terminal device, and as illustrated in FIG. 12, the method for determining information may include following steps.

In step 1201, one or more TCI states of the at least one joint TCI state and/or the at least one DL TCI state indicated by the indication information is determined as the TCI state configured for the PDCCH transmission and/or the downlink signal transmission based on a fourth signaling and/or a default rule sent by a network device.

In an embodiment of the present disclosure, the fourth signaling may include at least one of: an RRC; a MAC CE; or DCI.

Furthermore, in an embodiment of the present disclosure, the plurality of TCI states may be two TCI states, three TCI states, or four TCI states.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

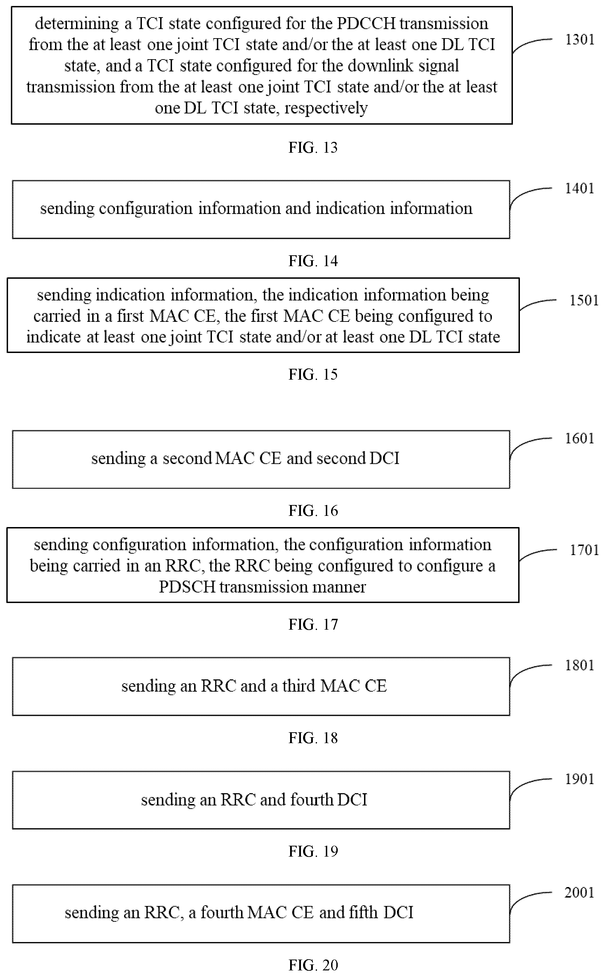

FIG. 13 is a flow chart of a method for determining information provided by an embodiment of the present disclosure, the method is performed by a terminal device, and as illustrated in FIG. 12, the method for determining information may include following steps.

In step 1301, a TCI state configured for the PDCCH transmission from the at least one joint TCI state and/or the at least one DL TCI state, and a TCI state configured for the downlink signal transmission from the at least one joint TCI state and/or the at least one DL TCI state are determined, respectively.

Specifically, in an embodiment of the present disclosure, a TCI state configured for the PDCCH transmission from the at least one joint TCI state and/or the at least one DL TCI state may be determined separately, and a TCI state configured for the downlink signal transmission from the at least one joint TCI state and/or the at least one DL TCI state may be determined separately.

For example, the first TCI state of the at least one joint TCI state and/or the at least one DL TCI state indicated by the indication information is determined as the TCI state configured for the PDCCH transmission based on the first signaling sent by the network device, and the second TCI state of the first two TCI states of the at least one joint TCI state and/or the at least one DL TCI state indicated by the indication information is determined as the TCI state configured for the downlink signal transmission based on a third signaling and/or a default rule sent by a network device.

In general, in the method for determining information provided by the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

It should be noted that any two or more of the first MAC CE, the second MAC CE, the third MAC CE, and the fourth MAC CE in the present disclosure, as a MAC CE of the first signaling, a MAC CE of the second signaling, a MAC CE of the third signaling and a MAC CE of the fourth signaling, may be different MAC CEs or the same MAC CE. Similarly, any two or more of the first DCI, the second DCI, the third DCI, and the fourth DCI in the present disclosure, as DCI of the first signaling, DCI of the second signaling, DCI of the third signaling and DCI of the fourth signaling, may be different DCIs or the same DCI. Furthermore, any two or more of RRCs carrying the configuration information in the present disclosure, as RRC of the first signaling, RRC of the second signaling, RRC of the third signaling and RRC of the fourth signaling, may be different RRCs or the same RRC.

FIG. 14 is a flow chart of a method for determining information provided by an embodiment of the present disclosure, the method is performed by a network device, and as illustrated in FIG. 14, the method for determining information may include following steps.

In step 1401, configuration information and indication information are sent.

The configuration information is configured to configure a PDSCH transmission manner, and the indication information is configured to indicate at least one joint TCI state and/or at least one downlink (DL) TCI state.

For details of the step 1401, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 15 is a flow chart of a method for determining information provided by an embodiment of the present disclosure, the method is performed by a network device, and as illustrated in FIG. 15, the method for determining information may include following steps.

In step 1501, indication information is sent, the indication information is carried in a first MAC CE, and the first MAC CE is configured to indicate at least one joint TCI state and/or at least one DL TCI state.

For details of the step 1501, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 16 is a flow chart of a method for determining information provided by an embodiment of the present disclosure, the method is performed by a network device, and as illustrated in FIG. 16, the method for determining information may include following steps.

In step 1601, a second MAC CE and second DCI are sent.

For details of the step 1601, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 17 is a flow chart of a method for determining information provided by an embodiment of the present disclosure, the method is performed by a network device, and as illustrated in FIG. 17, the method for determining information may include following steps.

In step 1701, configuration information is sent, the configuration information is carried in the RRC, and the RRC is configured to configure the PDSCH transmission manner.

For details of the step 1701, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 18 is a flow chart of a method for determining information provided by an embodiment of the present disclosure, the method is performed by a network device, and as illustrated in FIG. 18, the method for determining information may include following steps.

In step 1801, an RRC and a third MAC CE are sent.

For details of the step 1801, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 19 is a flow chart of a method for determining information provided by an embodiment of the present disclosure, the method is performed by a network device, and as illustrated in FIG. 19, the method for determining information may include following steps.

In step 1901, an RRC and a fourth DCI are sent.

For details of the step 1901, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 20 is a flow chart of a method for determining information provided by an embodiment of the present disclosure, the method is performed by a network device, and as illustrated in FIG. 20, the method for determining information may include following steps.

In step 2001, an RRC, a fourth MAC CE and fifth DCI are sent.

For details of the step 2001, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

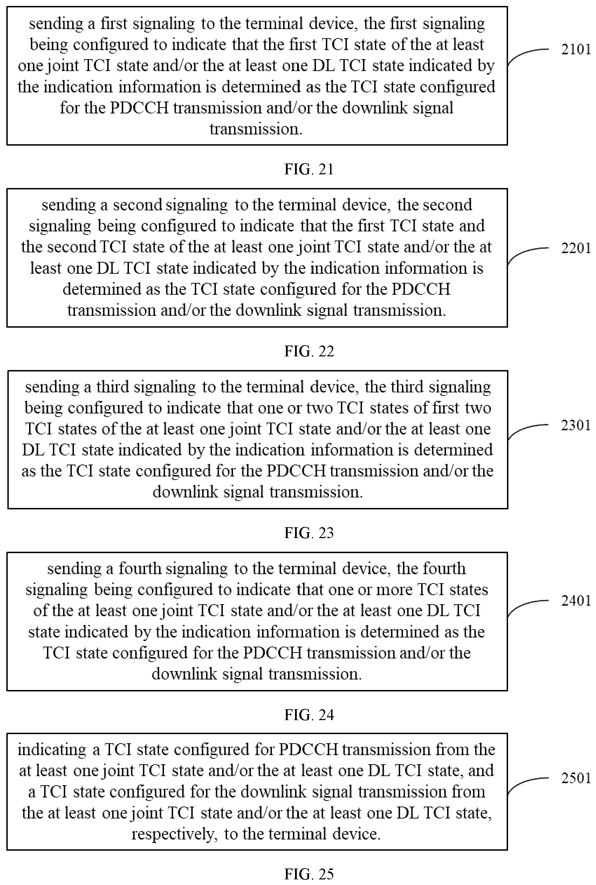

FIG. 21 is a flow chart of a method for determining information provided by an embodiment of the present disclosure, the method is performed by a network device, and as illustrated in FIG. 21, the method for determining information may include following steps.

In step 2101, a first signaling is sent to the terminal device, and the first signaling is configured to indicate that the first TCI state of the at least one joint TCI state and/or the at least one DL TCI state indicated by the indication information is determined as the TCI state configured for the PDCCH transmission and/or the downlink signal transmission.

For details of the step 2101, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 22 is a flow chart of a method for determining information provided by an embodiment of the present disclosure, the method is performed by a network device, and as illustrated in FIG. 22, the method for determining information may include following steps.

In step 2201, a second signaling is sent to the terminal device, and the second signaling is configured to indicate that the first TCI state and the second TCI state of the at least one joint TCI state and/or the at least one DL TCI state indicated by the indication information are determined as the TCI states configured for the PDCCH transmission and/or the downlink signal transmission.

For details of the step 2201, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 23 is a flow chart of a method for determining information provided by an embodiment of the present disclosure, the method is performed by a network device, and as illustrated in FIG. 23, the method for determining information may include following steps.

In step 2301, a third signaling is sent to the terminal device, and the third signaling is configured to indicate that one or two TCI states of the first two TCI states of the at least one joint TCI state and/or the at least one DL TCI state indicated by the indication information is determined as the TCI state configured for the PDCCH transmission and/or the downlink signal transmission.

For details of the step 2301, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 24 is a flow chart of a method for determining information provided by an embodiment of the present disclosure, the method is performed by a network device, and as illustrated in FIG. 24, the method for determining information may include following steps.

In step 2401, a fourth signaling is sent to the terminal device, and the fourth signaling is configured to indicate that one or more TCI states of the at least one joint TCI state and/or the at least one DL TCI state indicated by the indication information is determined as the TCI state configured for the PDCCH transmission and/or the downlink signal transmission.

For details of the step 2401, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

FIG. 25 is a flow chart of a method for determining information provided by an embodiment of the present disclosure, the method is performed by a network device, and as illustrated in FIG. 25, the method for determining information may include following steps.

In step 2501, a TCI state configured for the PDCCH transmission from the at least one joint TCI state and/or the at least one DL TCI state, and a TCI state configured for the downlink signal transmission from the at least one joint TCI state and/or the at least one DL TCI state are indicated respectively to the terminal device.

For details of the step 2501, reference may be made to the description of the embodiments described above.

In general, in the method for determining information provided by the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in a case where the PDSCH transmission manner configured by the configuration information is a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

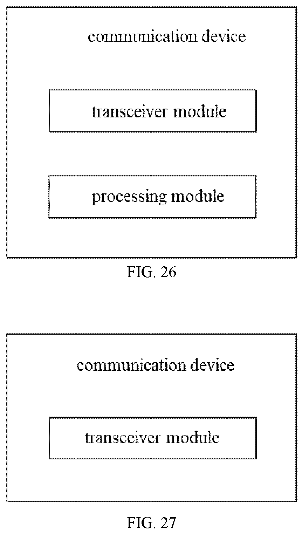

FIG. 26 is a schematic block diagram of a communication device provided by an embodiment of the present disclosure; and as illustrated in FIG. 26, the device includes:
a transceiver module configured to receive configuration information and indication information, in which the configuration information is configured to configure a PDSCH transmission manner, and the indication information is configured to indicate at least one joint TCI state and/or at least one downlink (DL) TCI state; and
a processing module configured to determine, in response to the PDSCH transmission manner configured by the configuration information being a target transmission manner, a TCI state configured for the PDCCH transmission and/or downlink signal transmission from the at least one joint TCI state and/or the at least one DL TCI state.

In general, in the communication device provided by embodiments of the present disclosure, the terminal device receives configuration information and indication information, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

Optionally, in an embodiment of the present disclosure, the target transmission manner may be coherent joint transmission (CJT).

Optionally, in an embodiment of the present disclosure, the indication information is carried in a first medium access control control element (MAC CE), and the first MAC CE is configured to indicate at least one joint TCI state and/or at least one DL TCI state.

Optionally, in an embodiment of the present disclosure, the TCI state indicated by the first MAC CE corresponds to the same codepoint, and an information domain corresponding to the codepoint is contained in first downlink control information (DCI).

Optionally, in an embodiment of the present disclosure, the indication information is carried in a second MAC CE, and the second MAC CE is configured to indicate at least one joint TCI state and/or at least one DL TCI state corresponding to a plurality of codepoints, respectively.

The method further includes: receiving second DCI, in which the second DCI is configured to indicate one codepoint of the plurality of codepoints.

Optionally, in an embodiment of the present disclosure, the configuration information is carried in a radio resource control (RRC), and the RRC is configured to configure the PDSCH transmission manner.

Optionally, in an embodiment of the present disclosure, the device is further configured to: receive a third MAC CE, in which the third MAC CE is configured to indicate the number of joint TCI states and/or DL TCI states corresponding to the PDSCH, or the third MAC CE is configured to indicate the at least one joint TCI state and/or the at least one DL TCI state, the TCI state indicated by the third MAC CE corresponds to the same codepoint, and an information domain corresponding to the codepoint is contained in third DCI.

Optionally, in an embodiment of the present disclosure, the device is further configured to: receive a fourth DCI, in which the fourth DCI is configured to indicate the number of joint TCI states and/or DL TCI states corresponding to the PDSCH, or the fourth DCI is configured to indicate one codepoint, and the one codepoint corresponds to at least one joint TCI state and/or at least one DL TCI state of joint TCI states and/or DL TCI states indicated by the indication information.

Optionally, in an embodiment of the present disclosure, the device is further configured to: receive a fourth MAC CE and fifth DCI, in which the fourth MAC CE is configured to indicate at least one first value, the first value is a candidate value for a number of joint TCI states and/or DL TCI states corresponding to the PDSCH, the fifth DCI is configured to indicate one codepoint, and the codepoint corresponds to one of the first value; or the fourth MAC CE is configured to indicate the at least one joint TCI state and/or the at least one DL TCI state corresponding to a plurality of codepoints, respectively, and the fifth DCI is configured to indicate one codepoint of the plurality of codepoints.

Optionally, in an embodiment of the present disclosure, the processing module is further configured to perform at least one of: determining a first TCI state of the at least one joint TCI state and/or the at least one DL TCI state indicated by the indication information as the TCI state configured for the PDCCH transmission and/or the downlink signal transmission based on a first signaling and/or a default rule sent by a network device; determining a first TCI state and a second TCI state of the at least one joint TCI state and/or the at least one DL TCI state indicated by the indication information as the TCI states configured for the PDCCH transmission and/or the downlink signal transmission based on a second signaling and/or a default rule sent by a network device; or determining one or two TCI states of first two TCI states of the at least one joint TCI state and/or the at least one DL TCI state indicated by the indication information as the TCI state configured for the PDCCH transmission and/or the downlink signal transmission based on a third signaling and/or a default rule sent by a network device.

Optionally, in an embodiment of the present disclosure, the joint TCI state and/or the DL TCI state may contain a quasi co-location type A (QCL Type A) and/or a QCL Type B.

Optionally, in an embodiment of the present disclosure, the joint TCI state or the DL TCI state may contain a quasi co-location type, and the quasi co-location includes at least one of following parameters: an average delay; a delay spread; a Doppler shift; or a Doppler spread.

Optionally, in an embodiment of the present disclosure, the first TCI state is a first TCI state of all TCI states indicated by the indication information; or the first TCI state is a first TCI state of TCI states containing a target QCL Type of all TCI states indicated by the indication information.

Optionally, in an embodiment of the present disclosure, the second TCI state is a second TCI state of all TCI states indicated by the indication information; or the second TCI state is a second TCI state of TCI states containing a target QCL Type of all TCI states indicated by the indication information.

Optionally, in an embodiment of the present disclosure, the first two TCI states are first two TCI states of all TCI states indicated by the indication information; or the first two TCI states are first two TCI states of TCI states containing a target QCL Type of all TCI states indicated by the indication information.

Optionally, in an embodiment of the present disclosure, the target QCL Type contains a QCL Type A or a QCL Type B.

Optionally, in an embodiment of the present disclosure, the processing module is further configured to: determine one or more TCI states of the at least one joint TCI state and/or the at least one DL TCI state indicated by the indication information as the TCI state configured for the PDCCH transmission and/or the downlink signal transmission based on a fourth signaling and/or a default rule sent by a network device.

Optionally, in an embodiment of the present disclosure, the first signaling, the second signaling, the third signaling or the fourth signaling may include at least one of: an RRC; a MAC CE; or DCI.

Optionally, in an embodiment of the present disclosure, the processing module is further configured to: determine a TCI state configured for the PDCCH transmission from the at least one joint TCI state and/or the at least one DL TCI state, and a TCI state configured for the downlink signal transmission from the at least one joint TCI state and/or the at least one DL TCI state, respectively.

Optionally, in an embodiment of the present disclosure, the downlink signal may include at least one of: a channel state information reference signal (CSI-RS); a demodulation reference signal (DMRS); a positioning reference signal (PRS); or a tracking reference signal (TRS).

FIG. 27 is a schematic block diagram of a communication device provided by an embodiment of the present disclosure; and as illustrated in FIG. 27, the device includes: a transceiver module configured to send configuration information and indication information, in which the configuration information is configured to configure a PDSCH transmission manner, and the indication information is configured to indicate at least one joint TCI state and/or at least one downlink (DL) TCI state.

In general, in the communication device provided by embodiments of the present disclosure, the network device sends configuration information and indication information to the terminal device, in which the configuration information is configured to configure a PDSCH transmission manner, and the indication information is configured to indicate the at least one joint TCI state and/or the at least one DL TCI state; and, in response to the PDSCH transmission manner configured by the configuration information being a target transmission manner, the terminal device determines the TCI state for the PDCCH transmission and/or the downlink signal transmission from the at least one joint TCI state and/or the at least one DL TCI state. In the method of the present disclosure, the target transmission manner may be CJT. The CJT may be CJT for 2 TRPs/RRHs, CJT for 3 TRPs/RRHs, or CJT for 4 TRPs/RRHs. Thus, it can be seen that the method of the present disclosure is mainly used in the scenario of CJT for 3 TRPs/RRHs or CJT for 4 TRPs/RRHs, but of course, it is also applicable to CJT for 2 TRPs/RRHs. That is, the present disclosure provides a manner for the terminal device to determine specifically which TCI state to use for PDCCH transmission for the scenario where a network device indicates 3 or 4 TCI states, thereby improving transmission performance based on Multi-TRP coherent joint transmission.

Optionally, in an embodiment of the present disclosure, the indication information is carried in a first MAC CE; and the first MAC CE is configured to indicate the at least one joint TCI state and/or the at least one DL TCI state.

Optionally, in an embodiment of the present disclosure, the TCI state indicated by the first MAC CE corresponds to the same codepoint, and an information domain corresponding to the codepoint is contained in first DCI.

Optionally, in an embodiment of the present disclosure, the indication information is carried in a second MAC CE, and the second MAC CE is configured to indicate at least one joint TCI state and/or at least one DL TCI state corresponding to a plurality of codepoints, respectively.

The device is further configured to: send second DCI, in which the second DCI is configured to indicate one codepoint of the plurality of codepoints.

Optionally, in an embodiment of the present disclosure, the configuration information is carried in an RRC, and the RRC is configured to configure the PDSCH transmission manner.

Optionally, in an embodiment of the present disclosure, the device is further configured to: send a third MAC CE, in which the third MAC CE is configured to indicate the number of joint TCI states and/or DL TCI states corresponding to the PDSCH, or the third MAC CE is configured to indicate the at least one joint TCI state and/or the at least one DL TCI state, each TCI state indicated by the third MAC CE corresponds to the same codepoint, and an information domain corresponding to the codepoint is contained in third DCI.

Optionally, in an embodiment of the present disclosure, the device is further configured to: send fourth DCI, in which the fourth DCI is configured to indicate the number of joint TCI states and/or DL TCI states corresponding to the PDSCH, or the fourth DCI is configured to indicate one codepoint, and the one codepoint corresponds to at least one joint TCI state and/or at least one DL TCI state of joint TCI states and/or DL TCI states indicated by the indication information.

Optionally, in an embodiment of the present disclosure, the device is further configured to: send a fourth MAC CE and fifth DCI, in which the fourth MAC CE is configured to indicate at least one first value, the first value is a candidate value for a number of joint TCI states and/or DL TCI states corresponding to the PDSCH, the fifth DCI is configured to indicate one codepoint, and the codepoint corresponds to one of the first value; or the fourth MAC CE is configured to indicate the at least one joint TCI state and/or the at least one DL TCI state corresponding to a plurality of codepoints, respectively, and the fifth DCI is configured to indicate one codepoint of the plurality of codepoints.

Optionally, in an embodiment of the present disclosure, the device is further configured to perform at least one of: sending a first signaling to the terminal device, and the first signaling is configured to indicate that the first TCI state of the at least one joint TCI state and/or the at least one DL TCI state indicated by the indication information is determined as the TCI state configured for the PDCCH transmission and/or the downlink signal transmission; or sending a second signaling to the terminal device, and the second signaling is configured to indicate that the first TCI state and the second TCI state of the at least one joint TCI state and/or the at least one DL TCI state indicated by the indication information are determined as the TCI states configured for the PDCCH transmission and/or the downlink signal transmission; or sending a third signaling to the terminal device, and the third signaling is configured to indicate that one or two TCI states of the first two TCI states of the at least one joint TCI state and/or the at least one DL TCI state indicated by the indication information is determined as the TCI state configured for the PDCCH transmission and/or the downlink signal transmission.

Optionally, in an embodiment of the present disclosure, the joint TCI state and/or the DL TCI state may contain a quasi co-location type A (QCL Type A) and/or a quasi co-location type B (QCL Type B).

Optionally, in an embodiment of the present disclosure, the joint TCI state or the DL TCI state may contain a quasi co-location type, and the quasi co-location includes at least one of following parameters: an average delay; a delay spread; a Doppler shift; or a Doppler spread.

Optionally, in an embodiment of the present disclosure, the first TCI state is a first TCI state of all TCI states indicated by the indication information; or the first TCI state is a first TCI state of TCI states containing a target QCL Type of all TCI states indicated by the indication information.

Optionally, in an embodiment of the present disclosure, the second TCI state is a second TCI state of all TCI states indicated by the indication information; or the second TCI state is a second TCI state of TCI states containing a target QCL Type of all TCI states indicated by the indication information.

Optionally, in an embodiment of the present disclosure, the first two TCI states are first two TCI states of all TCI states indicated by the indication information; or the first two TCI states are first two TCI states of TCI states containing a target QCL Type of all TCI states indicated by the indication information.

Optionally, in an embodiment of the present disclosure, the target QCL Type contains a QCL Type A or a QCL Type B.

Optionally, in an embodiment of the present disclosure, the device is further configured to: send a fourth signaling to the terminal device, and the fourth signaling is configured to indicate that one or more TCI states of the at least one joint TCI state and/or the at least one DL TCI state indicated by the indication information is determined as the TCI state configured for the PDCCH transmission and/or the downlink signal transmission.

Optionally, in an embodiment of the present disclosure, the first signaling, the second signaling, the third signaling or the fourth signaling may include at least one of: an RRC; a MAC CE; or DCI.

Optionally, in an embodiment of the present disclosure, the network device is configured to indicate a TCI state configured for the PDCCH transmission from the at least one joint TCI state and/or the at least one DL TCI state, and a TCI state configured for the downlink signal transmission from the at least one joint TCI state and/or the at least one DL TCI state, respectively to the terminal device.

Optionally, in an embodiment of the present disclosure, the downlink signal may include at least one of: a CSI-RS; a DMRS; a PRS; or a TRS.

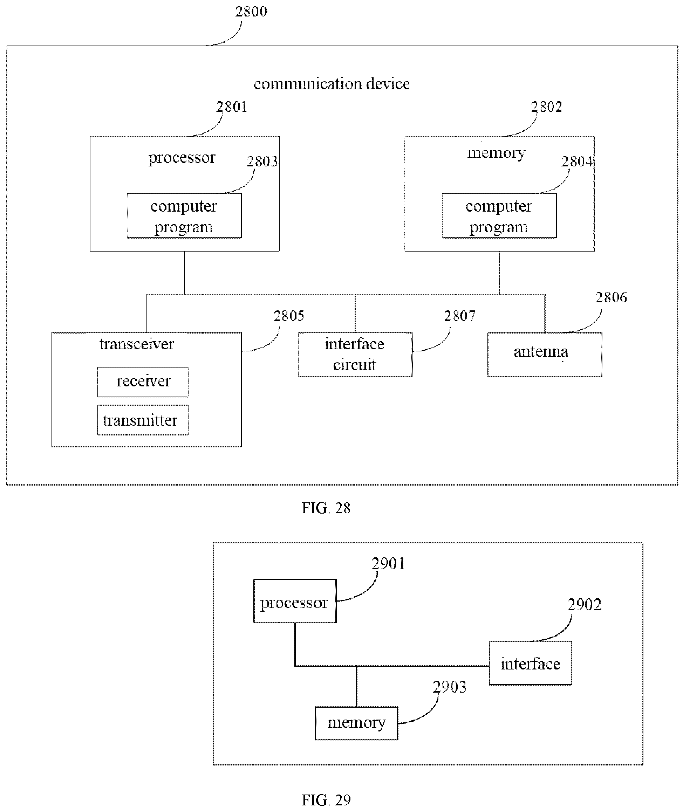

Referring to FIG. 28, FIG. 28 is a block diagram of a communication device 2800 provided by an embodiment of the present disclosure. The communication device 2800 may be a network device, a terminal device, a chip, a chip system, or a processor, etc. that supports the network device to realize the above-described method, or a chip, a chip system, or a processor, etc. that supports the terminal device to realize the above-described method. The device may be configured to realize the methods described in the above method embodiments, and the details may be found in the description of the above method embodiments.

The communication device 2800 may include one or more processors 2801. The processor 2801 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 2800 may also include one or more memories 2802, on which a computer program 2804 may be stored, and the processor 2801 executes the computer program 2804 to cause the communication device 2800 to perform the method described in the method embodiments described above. Optionally, data may also be stored in the memory 2802. The communication device 2800 and the memory 2802 may be provided separately or may be integrated together.

Optionally, the communication device 2800 may also include a transceiver 2805, and an antenna 2806. The transceiver 2805 may be referred to as a transceiver unit, a transceiver machine, or a transceiver circuit, etc., and is used to implement the sending and receiving functions. The transceiver 2805 may include a receiver and a transmitter, the receiver may be referred to as a receiving machine or a receiving circuit, etc., for implementing the receiving function, and the transmitter may be referred to as a transmitting machine or a transmitting circuit, etc., for implementing the sending function.

Optionally, the communication device 2800 may also include one or more interface circuits 2807. The interface circuit 2807 is used to receive code instructions and transmit them to the processor 2801. The processor 2801 runs said code instructions to cause the communication device 2800 to perform the method described in the method embodiments above.

In an implementation, the processor 2801 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or, the above transceiver circuit, interface or interface circuit may be used for signal transmission or delivery.

In one implementation, the processor 2801 may store a computer program 2803, and the computer program 2803 running on the processor 2801 may cause the communication device 2800 to perform the method described in the method embodiments above. The computer program 2803 may be solidified in the processor 2801, and in this case, the processor 2801 may be implemented by hardware.

In one implementation, the communication device 2800 may include a circuit, and the circuit may realize the function of sending or receiving or communicating in the method embodiments above. The processor and transceiver described in the present application may be implemented on integrated circuits (ICs), analog ICs, radio frequency integrated circuits (RFICs), mixed-signal ICs, application specific integrated circuits (ASICs), printed circuit boards (PCBs), electronic devices, and the like. The processor and transceiver can also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the present disclosure is not limited thereto, and the structure of the communication device may not be limited by FIG. 28. The communication device may be a stand-alone device or may be part of a larger device. For example the communication device may be:
(1) a stand-alone integrated circuit IC, or chip, or, chip system or subsystem;
(2) a collection having one or more ICs, optionally, the collection of ICs may also include storage components for storing data, computer programs;
(3) ASIC, such as a modem;
(4) a module that can be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

For the case where the communication device may be a chip or a chip system, see the block schematic diagram of the chip illustrated in FIG. 29. The chip illustrated in FIG. 29 includes a processor 2901 and an interface 2902. The number of processors 2901 may be one or more, and the number of interfaces 2902 may be more than one.

Optionally, the chip further includes a memory 2903, and the memory 2903 is configured to store necessary computer programs and data.

A person skilled in the art may also understand that the various illustrative logical blocks and steps set forth in the embodiments of the present application may be implemented by electronic hardware, computer software, or a combination of both. Whether such a function is realized in hardware or software depends on the specific application and the design requirements of the overall system. A person skilled in the art may, for each particular application, use a variety of functions that can be implemented using various methods, but such implementations should not be construed as being outside the scope of protection of the embodiments of the present application.

The present application also provides a readable storage medium having stored thereon instructions which, when executed by a computer, realize the functions of any of the above method embodiments.

The present application also provides a computer program product which, when executed by a computer, realizes the functions of any of the above method embodiments.

In the above embodiments, this may be accomplished in whole or in part by software, hardware, firmware, or any combination thereof. When implemented using software, it may be implemented in whole or in part as a computer program product. The computer program product includes one or more computer programs. Loading and executing a computer program on a computer produces, in whole or in part, a process or function in accordance with embodiments of the present application. The computer may be a general-purpose computer, a specialized computer, a computer network, or other programmable device. The computer program may be stored in a computer-readable storage medium or transmitted from one computer-readable storage medium to another computer-readable storage medium, e.g., the computer program may be transmitted from one website site, computer, server, or data center to another website site, computer, server, or data center via wired (e.g., coaxial cable, fiber optics, digital subscriber line, DSL) or wireless (e.g., infrared, wireless, microwave, etc.) means. The computer readable storage medium may be any usable medium to which a computer has access or a data storage device such as a server, data center, etc., that contains one or more usable media integrated. The available media described may be magnetic media (e.g., floppy disk, hard disk, tape), optical media (e.g., high-density digital video disc (DVD)), or semiconductor media (e.g., solid state disk (SSD)) and the like.

A person skilled in the art may understand that the first, second and other numbers involved in the present application are only described for the convenience of distinction, and are not used to limit the scope of the embodiments of the present application, but also indicate the order of precedence.

The at least one of the present application may also be described as one or more, and the plurality may be two, three, four, or more, without limitation of the present application. In embodiments of the present application, for a type of technical feature, the technical features in the type of technical feature are distinguished by "first", "second", "third", "A", "B", "C" and "D", etc., the technical features described by the "first", "second", "third", "A", "B", "C", and "D", are in no order of priority or size.

The correspondences shown in the tables in the present application can be configured or can be predefined. The values of the information in the tables are merely examples and may be configured to other values, which are not limited by the present application. When configuring the correspondence between the information and each parameter, it is not necessary to configure all the correspondences illustrated in each table. For example, the correspondence illustrated in certain rows in the tables in the present application may also not be configured. As another example, appropriate distortion adjustments may be made based on the above table, e.g., splitting, merging, etc. The names of the parameters shown in the headings in the above tables may also be other names understandable by the communication device, and the values or representations of the parameters thereof may also be other values or representations understandable by the communication device. Each of the above tables may also be implemented with other data structures, for example, an array, queue, container, stack, linear table, pointer, chain table, tree, graph, structure, class, heap, or hash table may be used.

Predefined in the present application may be understood as defined, pre-defined, stored, prestored, pre-negotiated, pre-configured, solidified, or pre-fired.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A person skilled in the art may use different methods for each particular application to achieve the described functionality, but such implementations should not be considered outside the scope of the present application.

It is clearly understood by those skilled in the field to which it belongs that, for the convenience and brevity of the description, the specific working processes of the above-described systems, apparatuses, and units can be referred to the corresponding processes in the foregoing embodiments of the method, and will not be repeated herein.

The above-described are merely specific implementations of the present application, but the protection scope of the present application is not limited to this. The conceivable change or alternative by those skilled in the art within the technical scope disclosed by the present application should be covered in the protection scope of the present application. Therefore, the protection scope of the present application is subject to the protection scope of the claims.

## Claims

1. A method for determining information, performed by a terminal device, comprising:
receiving configuration information and indication information, wherein the configuration information is configured to configure a physical downlink shared channel (PDSCH) transmission manner, and the indication information is configured to indicate at least one joint transmission configuration indicator (TCI) state and/or at least one downlink (DL) TCI state; and
in response to the PDSCH transmission manner configured by the configuration information being a target transmission manner, determining a TCI state configured for physical downlink control channel (PDCCH) transmission and/or downlink signal transmission from the at least one joint TCI state and/or the at least one DL TCI state.

2. The method according to claim 1, wherein the target transmission manner is coherent joint transmission (CJT).

3. The method according to claim 1, wherein the indication information is carried in a first medium access control control element (MAC CE), and the first MAC CE is configured to indicate the at least one joint TCI state and/or the at least one DL TCI state.

4. The method according to claim 3, wherein the TCI state indicated by the first MAC CE corresponds to the same codepoint, and an information domain corresponding to the codepoint is contained in first downlink control information (DCI).

5. The method according to claim 1, wherein the indication information is carried in a second MAC CE, and the second MAC CE is configured to indicate the at least one joint TCI state and/or the at least one DL TCI state corresponding to a plurality of codepoints, respectively, and
the method further comprises:
receiving second DCI, wherein the second DCI is configured to indicate one codepoint of the plurality of codepoints.

6. The method according to claim 1, wherein the configuration information is carried in a radio resource control (RRC), and the RRC is configured to configure the PDSCH transmission manner.

7. The method according to claim 6, further comprising:
receiving a third MAC CE, wherein the third MAC CE is configured to indicate a number of the joint TCI states and/or the DL TCI states corresponding to the PDSCH; or
the third MAC CE is configured to indicate the at least one joint TCI state and/or the at least one DL TCI state, the TCI state indicated by the third MAC CE corresponds to the same codepoint, and an information domain corresponding to the codepoint is contained in third DCI.

8. The method according to claim 6, further comprising:
receiving fourth DCI, wherein the fourth DCI is configured to indicate a number of the joint TCI states and/or the DL TCI states corresponding to the PDSCH; or
the fourth DCI is configured to indicate one codepoint, and the one codepoint corresponds to at least one joint TCI state and/or at least one DL TCI state of the joint TCI states and/or the DL TCI states indicated by the indication information.

9. The method according to claim 6, further comprising:
receiving a fourth MAC CE and fifth DCI, wherein the fourth MAC CE is configured to indicate at least one first value, the first value is a candidate value for a number of the joint TCI states and/or the DL TCI states corresponding to the PDSCH, the fifth DCI is configured to indicate one codepoint, and the codepoint corresponds to one of the first value; or
the fourth MAC CE is configured to indicate the at least one joint TCI state and/or the at least one DL TCI state corresponding to a plurality of codepoints, respectively, and the fifth DCI is configured to indicate one codepoint of the plurality of codepoints.

10. The method according to claim 1, wherein determining the TCI state configured for the PDCCH transmission and/or the downlink signal transmission from the at least one joint TCI state and/or the at least one DL TCI state comprises at least one of:
determining a first TCI state of the at least one joint TCI state and/or the at least one DL TCI state indicated by the indication information as the TCI state configured for the PDCCH transmission and/or the downlink signal transmission based on a first signaling and/or a default rule sent by a network device;
determining a first TCI state and a second TCI state of the at least one joint TCI state and/or the at least one DL TCI state indicated by the indication information as the TCI states configured for the PDCCH transmission and/or the downlink signal transmission based on a second signaling and/or a default rule sent by a network device; or
determining one or two TCI states of first two TCI states of the at least one joint TCI state and/or the at least one DL TCI state indicated by the indication information as the TCI state configured for the PDCCH transmission and/or the downlink signal transmission based on a third signaling and/or a default rule sent by a network device.

11. The method according to claim 10, wherein the joint TCI state and/or the DL TCI state contains a quasi co-location (QCL) Type A and/or a QCL Type B.

12. The method according to claim 10, wherein the joint TCI state and/or the DL TCI state contains a quasi co-location type, and the quasi co-location type comprises at least one of following parameters:
an average delay;
a delay spread;
a Doppler shift; or
a Doppler spread.

13. The method according to claim 10, wherein the first TCI state is a first TCI state of all TCI states indicated by the indication information; or
the first TCI state is a first TCI state of TCI states containing a target QCL Type of all TCI states indicated by the indication information.

14. The method according to claim 10, wherein the second TCI state is a second TCI state of all TCI states indicated by the indication information; or
the second TCI state is a second TCI state of TCI states containing a target QCL Type of all TCI states indicated by the indication information.

15. The method according to claim 10, wherein the first two TCI states are first two TCI states of all TCI states indicated by the indication information; or
the first two TCI states are first two TCI states of TCI states containing a target QCL Type of all TCI states indicated by the indication information.

16. The method according to claim 13, 14, or 15, wherein
the target QCL Type contains a QCL Type A or a QCL Type B.

17. The method according to claim 1, wherein determining the TCI state configured for the PDCCH transmission and/or the downlink signal transmission from the at least one joint TCI state and/or the at least one DL TCI state comprises:
determining one or more TCI states of the at least one joint TCI state and/or the at least one DL TCI state indicated by the indication information as the TCI state configured for the PDCCH transmission and/or the downlink signal transmission based on a fourth signaling and/or a default rule sent by a network device.

18. The method according to claim 10 or 17, wherein the first signaling, the second signaling, the third signaling or the fourth signaling comprises at least one of:
an RRC;
an MAC CE; or
DCI.

19. The method according to claim 1, wherein determining the TCI state configured for the PDCCH transmission and/or the downlink signal transmission from the at least one joint TCI state and/or the at least one DL TCI state comprises:
determining a TCI state configured for the PDCCH transmission from the at least one joint TCI state and/or the at least one DL TCI state, and a TCI state configured to the downlink signal transmission from the at least one joint TCI state and/or the at least one DL TCI state, respectively.

20. The method according to any one of claims 1 to 19, wherein the downlink signal comprises at least one of:
a channel state information reference signal (CSI-RS);
a demodulation reference signal (DMRS);
a positioning reference signal (PRS); or
a tracking reference signal (TRS).

21. A method for determining information, performed by a network device, comprising:
sending configuration information and indication information, wherein the configuration information is configured to configure a PDSCH transmission manner, and the indication information is configured to indicate at least one joint TCI state and/or at least one downlink (DL) TCI state.

22. The method according to claim 21, wherein the indication information is carried in a first MAC CE, and the first MAC CE is configured to indicate the at least one joint TCI state and/or the at least one DL TCI state.

23. The method according to claim 21, wherein the TCI state indicated by the first MAC CE corresponds to the same codepoint, and an information domain corresponding to the codepoint is contained in first DCI.

24. The method according to claim 21, wherein the indication information is carried in a second MAC CE, and the second MAC CE is configured to indicate the at least one joint TCI state and/or the at least one DL TCI state corresponding to a plurality of codepoints, respectively; and
the method further comprises: sending second DCI, wherein the second DCI is configured to indicate one codepoint of the plurality of codepoints.

25. The method according to claim 21, wherein the configuration information is carried in an RRC, and the RRC is configured to configure the PDSCH transmission manner.

26. The method according to claim 25, further comprising:
sending a third MAC CE, wherein the third MAC CE is configured to indicate a number of joint TCI states and/or DL TCI states corresponding to the PDSCH; or
the third MAC CE is configured to indicate the at least one joint TCI state and/or the at least one DL TCI state, each TCI state indicated by the third MAC CE corresponds to the same codepoint, and an information domain corresponding to the codepoint is contained in third DCI.

27. The method according to claim 25, further comprising:
sending fourth DCI, wherein the fourth DCI is configured to indicate a number of joint TCI states and/or DL TCI states corresponding to the PDSCH; or
the fourth DCI is configured to indicate one codepoint, and the one codepoint corresponds to at least one joint TCI state and/or at least one DL TCI state of the joint TCI states and/or the DL TCI states indicated by the indication information.

28. The method according to claim 21, further comprising:
sending a fourth MAC CE and fifth DCI, wherein the fourth MAC CE is configured to indicate at least one first value, the first value is a candidate value for a number of joint TCI states and/or DL TCI states corresponding to the PDSCH, the fifth DCI is configured to indicate one codepoint, and the codepoint corresponds to one of the first value; or
the fourth MAC CE is configured to indicate the at least one joint TCI state and/or the at least one DL TCI state corresponding to a plurality of codepoints, respectively, and the fifth DCI is configured to indicate one codepoint of the plurality of codepoints.

29. The method according to claim 21, further comprises at least one of:
sending a first signaling to the terminal device, wherein the first signaling is configured to indicate that a first TCI state of the at least one joint TCI state and/or the at least one DL TCI state indicated by the indication information is determined as a TCI state configured for PDCCH transmission and/or downlink signal transmission;
sending a second signaling to the terminal device, wherein the second signaling is configured to indicate that a first TCI state and a second TCI state of the at least one joint TCI state and/or the at least one DL TCI state indicated by the indication information are determined as TCI states configured for PDCCH transmission and/or downlink signal transmission; or
sending a third signaling to the terminal device, wherein the third signaling is configured to indicate that one or two TCI states of first two TCI states of the at least one joint TCI state and/or the at least one DL TCI state indicated by the indication information is determined as a TCI state configured for PDCCH transmission and/or downlink signal transmission.

30. The method according to claim 29, wherein the joint TCI state and/or the DL TCI state contains a quasi co-location (QCL) Type A and/or a quasi co-location Type B.

31. The method according to claim 29, wherein the joint TCI state and/or the DL TCI state contains a quasi co-location type, and the quasi co-location type comprises at least one of following parameters:
an average delay;
a delay spread;
a Doppler shift; or
a Doppler spread.

32. The method according to claim 29, wherein the first TCI state is a first TCI state of all TCI states indicated by the indication information; or
the first TCI state is a first TCI state of TCI states containing a target QCL Type of all TCI states indicated by the indication information.

33. The method according to claim 29, wherein the second TCI state is a second TCI state of all TCI states indicated by the indication information; or
the second TCI state is a second TCI state of TCI states containing a target QCL Type of all TCI states indicated by the indication information.

34. The method according to claim 29, wherein the first two TCI states are first two TCI states of all TCI states indicated by the indication information; or
the first two TCI states are first two TCI states of TCI states containing a target QCL Type of all TCI states indicated by the indication information.

35. The method according to claim 32, 33, or 34, wherein
the target QCL Type contains a QCL Type A or a QCL Type B.

36. The method according to claim 21, further comprising:
sending a fourth signaling to the terminal device, wherein the fourth signaling is configured to indicate that one or more TCI states of the at least one joint TCI state and/or the at least one DL TCI state indicated by the indication information are determined as a TCI state configured for PDCCH transmission and/or downlink signal transmission.

37. The method according to claim 29 or 36, wherein the first signaling, the second signaling, the third signaling or the fourth signaling comprises at least one of:
an RRC;
an MAC CE; or
DCI.

38. The method according to claim 21, wherein the network device is configured to indicate a TCI state configured for the PDCCH transmission from the at least one joint TCI state and/or the at least one DL TCI state, and a TCI state configured for the downlink signal transmission from the at least one joint TCI state and/or the at least one DL TCI state, respectively, to the terminal device.

39. The method according to any one of claims 21 to 38, wherein the downlink signal comprises at least one of:
a CSI-RS;
a DMRS;
a PRS; or
a TRS.

40. A communication device, configured in a terminal device, comprising:
a transceiver module configured to receive configuration information and indication information, wherein the configuration information is configure a PDSCH transmission manner, and the indication information is configured to indicate at least one joint TCI state and/or at least one downlink (DL) TCI state; and
a processing module configured to determine, in response to the PDSCH transmission manner configured by the configuration information being a target transmission manner, a TCI state configured for PDCCH transmission and/or downlink signal transmission from the at least one joint TCI state and/or the at least one DL TCI state.

41. A communication device, configured in a network device, comprising:
a transceiver module configured to send configuration information and indication information, wherein the configuration information is configured to configure a PDSCH transmission manner, and the indication information is configured to indicate at least one joint TCI state and/or at least one downlink (DL) TCI state.

42. A communication device, comprising a processor and a memory, wherein the memory stores a computer program, and the processor executes the computer program stored in the memory to cause the device to perform the method according to any one of claims 1 to 20, or the processor executes the computer program stored in the memory to cause the device to perform the method according to any one of claims 21 to 39.

43. A communication device, comprising a processor and an interface circuit, wherein
the interface circuit is configured to receive code instructions and transmit the code instructions to the processor; and
the processor is configured to run the code instructions to perform the method according to any one of claims 1 to 20, or configured to run the code instructions to perform the method according to any one of claims 21 to 29.

44. A computer-readable storage medium configured to store instructions that, when the instructions are executed, cause the method according to any one of claims 1 to 20 to be implemented, or when the instructions are executed, cause the method according to any one of claims 21 to 39 to be implemented.
